# EUROPEAN PATENT APPLICATION

(11) **EP 4 250 060 A1**
(43) Date of publication of application: **27.09.2023**
(21) Application number: 22164251.5
(22) Date of filing: 25.03.2022
(51) Int. Cl.: G06F 3/01

(54) **APPARATUS, SYSTEMS, METHODS AND COMPUTER PROGRAMS FOR TRANSFERRING SENSATIONS**

(71) Applicant: Nokia Technologies Oy, 02610 Espoo (FI)
(72) Inventor: ZHENG, Mingde, Basking Ridge, NJ, 08807 (US); SAMANTA, Bibek, Piscataway, NJ, 08854 (US)
(74) Representative: Swindell & Pearson Limited

(57) **Abstract**

Examples of the disclosure relate to apparatus, systems, methods and computer programs for transferring sensations. In some examples a system comprising at least one first user apparatus, at least one network apparatus and at least one second user apparatus. The first user apparatus can be configured to detect sensations of a first user and generate a generic sensation profile indicative of the detected sensations. The network apparatus can be configured to obtain the generic sensation profile and information indicative of physiological features of a plurality of sensory nerves and receptors of a second user and personalise the generic sensation profile to account for the physiological features of a plurality of sensory nerves and receptors of the second user. The second user apparatus can be configured to obtain the personalised sensation profile for the second user and use the personalised sensation profile to control stimuli provided to the second user so as to generate sensations corresponding to the generic sensation profile.

## Description

### TECHNOLOGICAL FIELD

Examples of the disclosure relate to apparatus, systems methods and computer programs for transferring sensations. Some relate to apparatus, systems, methods and computer programs for transferring sensations to enable an end user to experience one or more specific sensations.

### BACKGROUND

Enabling an end user to experience sensations such as touch, pressure, heat, itches or other sensations could be used in a variety of applications. For instance, it could be used in gaming applications, mediated reality applications, communications applications or any other suitable applications.

### BRIEF SUMMARY

According to various, but not necessarily all, examples of the disclosure there is provided an apparatus comprising means for:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

The personalised sensation profile may be generated by;
obtaining a personalised sensory map for the user where the personalised sensory map indicates the physiological features of a plurality of sensory nerves and receptors of the user; and
using the personalised sensory map to modify a generic sensation profile.

The personalised sensory map may be obtained by;
applying a stimulating electrical input signal to the user so as to cause optically detectable changes of the plurality of sensory nerves and receptors of the user; and
using one or more optical devices to detect the optically detectable changes and using the outputs of the optical devices to generate the personalised sensory map.

Obtaining the personalised sensation profile may comprise receiving a generic sensation profile and personalising the generic sensation profile to account for the locations of the plurality of sensory nerves and receptors of the user.

Obtaining the personalised sensation profile may comprise receiving the personalised sensation profile from a network device.

The target sensations indicated in the personalised sensation profile may correspond to one or more sensations experienced by a different user.

The stimuli provided to the user may comprise a plurality of stimulating electrical signals provided by a plurality of electrodes positioned on the user and information from the personalised sensation profile may be used to control one or more parameters of the electrical stimulating signal signals provided by the electrodes to the user.

The one or more parameters of the electrical stimulating signals that are controlled may comprise of amplitude, frequency, duration, cycle, pattern, shape.

The plurality of electrodes may be provided within a wearable device.

The plurality of sensory nerves and receptors of the user may comprise one or more of: heat receptors, cold receptors, pain receptors, itch sensitive receptors, hair movement receptors, mechanoreceptors.

According to various, but not necessarily all, examples of the disclosure there is provided a method comprising:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

According to various, but not necessarily all, examples of the disclosure there is provided a computer program comprising computer program instructions that, when executed by processing circuitry, cause:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

According to various, but not necessarily all, examples of the disclosure there is provided an apparatus comprising means for:
obtaining a generic sensation profile indicative of target sensations that are to be provided to a user;
obtaining information indicative physiological features of a plurality of sensory nerves and receptors of the user;
personalising the generic sensation profile to account for the physiological features of a plurality of sensory nerves and receptors of the user; and
enabling the personalised sensation profile to be used to control stimuli provided to the user so as to generate sensations corresponding to the target sensations of the generic sensation profile.

The information indicative physiological features of a plurality of sensory nerves and receptors of the user may be obtained in a personalised sensory map of the user.

The personalised sensory map may be obtained by applying a stimulating electrical input signal to a user so as to cause optically detectable changes of the plurality of sensory nerves and receptors of the user and using one or more optical devices to detect the optically detectable changes and using the outputs the of the optical devices to generate the personalised sensory map.

The stimuli provided to the user may comprise a plurality of stimulating electrical signals provided by a plurality of electrodes positioned on the user and information from the personalised sensation profile may be used to control one or more parameters of the electrical stimulating signal signals provided by the electrodes to the user.

According to various, but not necessarily all, examples of the disclosure there is provided a method comprising:
obtaining a generic sensation profile indicative of target sensations that are to be provided to a user;
obtaining information indicative physiological features of a plurality of sensory nerves and receptors of the user;
personalising the generic sensation profile to account for the physiological features of a plurality of sensory nerves and receptors of the user; and
enabling the personalised sensation profile to be used to control stimuli provided to the user so as to generate sensations corresponding to the target sensations of the generic sensation profile.

According to various, but not necessarily all, examples of the disclosure there is provided a computer program comprising computer program instructions that, when executed by processing circuitry, cause:
obtaining a generic sensation profile indicative of target sensations that are to be provided to a user;
obtaining information indicative physiological features of a plurality of sensory nerves and receptors of the user;
personalising the generic sensation profile to account for the physiological features of a plurality of sensory nerves and receptors of the user; and
enabling the personalised sensation profile to be used to control stimuli provided to the user so as to generate sensations corresponding to the target sensations of the generic sensation profile.

According to various, but not necessarily all, examples of the disclosure there is provided a system comprising a first user apparatus, a second user apparatus and at least one network apparatus wherein;
the first user apparatus is configured to detect sensations of a first user and generate a generic sensation profile indicative of the detected sensations;
the network apparatus is configured to obtain the generic sensation profile and information indicative of physiological features of a plurality of sensory nerves and receptors of a second user and personalise the generic sensation profile to account for the physiological features of a plurality of sensory nerves and receptors of the second user; and
the second user apparatus is configured to obtain the personalised sensation profile for the second user and use the personalised sensation profile to control stimuli provided to the second user so as to generate sensations corresponding to the generic sensation profile.

The generic sensation profile may be obtained from a first user.

### BRIEF DESCRIPTION

Some examples will now be described with reference to the accompanying drawings in which:
FIG. 1 shows an example system;
FIG. 2 shows an example method;
FIG. 3 shows an example method;
FIG. 4 shows an example user device;
FIG. 5 shows an example user device;
FIGS. 6A to 6C show an example device;
FIGS. 7A and 7B show another example user device;
FIG. 8 shows another example system;
FIG. 9 shows another example system;
FIG. 10 shows example electrical stimulating signals;
FIG. 11 shows example electrical stimulating signals;
FIG. 12 shows example electrical stimulating signals;
FIG. 13 shows example sensory nerves and receptors; and
FIG. 14 shows an example apparatus.

### DETAILED DESCRIPTION

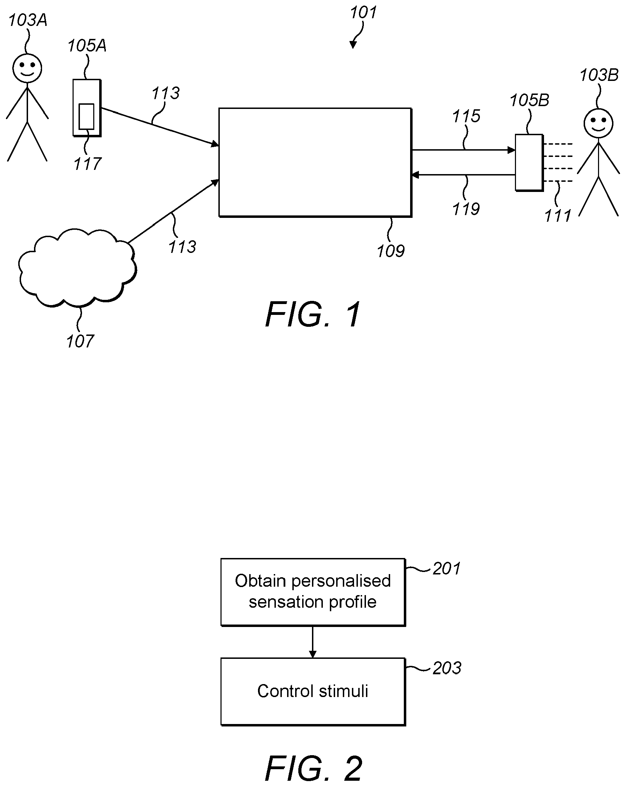

It can be useful to control sensations felt by a user. For example, if a user is playing a game or using mediated reality, enabling the user to experience sensations such as touch, pressure, temperature, pain, or other sensations can improve the game or mediated reality for the user. For instance, it can make a game feel more realistic. The control of the sensations could also enable information to be provided to an end user. For example, it could provide an end user with information about sensations or the environment that a different user is experiencing. Fig. 1 schematically shows an example system 101 that could be used to control sensations felt by a user 103.

In the example of Fig. 1 the system 101 comprises a first user device 105A, a second user device 105B and a network 109. The first user device 105A is associated with a first user 103A and the second user device 105B is associated with a second user 103B. The first user 103A and the second user 103B are different users and can be located in different locations. In the example of Fig. 1 only one first user device 105A and one second user device 105B are shown. In other examples the system 101 could comprise any number of first user devices 105A and any number of second user devices 105B.

The first user device 105A can comprise any device that can be configured to obtain information about sensations that are experienced by the first user 103A. The sensations that are experienced by the first user 103A could comprise any sensations that are detected via the skin of the first user 103A. The sensations could comprise touch, pressure, temperature, pain, itching or any other suitable sensation or combinations of sensations.

The first user device 105A can comprise any suitable means 117 that enables information about the sensations experienced by the first user 103A to be collected. In some examples the means 117 for collecting information about the sensations experienced by the first user 103A can comprise one or more stimulators and one or more optical devices, or means for obtaining information from one or more associated optical devices.

The one or more stimulators of the first user device 105A can comprise any means for stimulating the user 103A or part of the user 103A. The one or more stimulators can be configured to stimulate part of the user's skin. The stimulation causes a detectable response within the skin of the user 103A. The detectable response can be a response from the sensory nerves and receptors within the user's skin.

The detectable response can change when a user experiences an external stimulus. The external stimulus could be heat, pain, pressure, impulse or any other suitable external stimulus. The one or more optical devices can be configured to detect the change in the detectable response from changes within the sensory nerves and receptors.

In some examples the stimulators can comprise one or more electrodes configured to enable stimulating electrical signals to be provided to the skin of the first user 103A. Other types of stimulators could be used in other examples.

The optical devices can be configured to detect light reflected or scattered from the first user 103A. The optical devices can be configured to detect light reflected or scattered from the skin of the first user 103A.

In some examples the optical devices can comprise one or more emitters that can be used to emit light and one or more light sensors that can be used to detect light reflected or scattered from the first user 103A. The emitters can be configured to enable light from the optical device to be used to scan the first user 103A. For example, the light can be used to scan part of the surface of the skin of the first user 103A. The emitters and sensors can be positioned to enable a particular section of the first user 103A to be monitored. Using emitters and sensors in different positions can enable different parts of the first user 103A to be monitored.

The light that is detected by the one or more light sensors can be dependent upon the sensations felt by the first user 103A. Therefore, monitoring the light detected by the light sensors can enable information about the sensations felt by the first user 103A to be detected.

In some examples the optical devices can comprise one or more optical coherence tomography (OCT) devices or any other suitable type of device. The OCT devices can use near infrared light to scan the first user 103A, or any other wavelength with penetration depth suitable for deep skin imaging.

In some examples the optical devices can be one or more polarization sensitive devices. This can enable the optical device to detect changes in polarization of the light from the first user 103A. The optically detectable changes can comprise a change in one or more optical properties within the skin of the first user 103A. The optical properties can comprise one or more of, refractive index, birefringence, fluorescence or any other suitable optical property. The optically detectable changes can comprise changes that are internal to the skin of the first user 103A, for example nerves within the skin of the first user 103A.

In some examples the optical devices can be configured to enable the optically detectable changes of the skin of the first user 103A to be measured. For example, the change in the refractive index, birefringence, fluorescence or any other suitable optical property could be measured from the light reflected or scattered from the skin of the first user 103A and detected by the optical device. This can enable different types of sensations to be identified. In some examples this can enable a magnitude or level of intensity of the sensations to be identified.

The sensations that are felt by the first user 103A could be in response to an external stimulus. For example, the first user 103A could be touching an object or an object could touch the first user 103A or any suitable other external stimulus could cause the sensations.

The information 113 about the sensations felt by the first user 103A can be used to generate a sensation profile. The sensation profile can comprise an indication of the types and/or intensities of target sensations that are to be felt by a second user 103B. In some examples the information 113 about the sensations felt by the first user 103A can be transmitted from the first user device 105A to the network 109. In such examples the network could then use the information 113 about the sensations felt by the first user 103A to generate the sensation profile. In other examples the first user device 105A could be configured to convert the information about the sensations felt by the first user 103A into the sensation profile.

The sensation profile that is obtained by the network 109 could be a generic sensation profile. The generic sensation profile could be suitable to be provided to any end user and could be configured to be adapted so that it can be used by any end user device 105. The generic sensation profile could be configured so that it is not specific to any end user 103.

The network 109 could comprise any communication network that enables the transfer of information between the first user device 105A and the second user device 105B. The network could comprise wired and/or wireless communication networks.

The network 109 can be configured to receive information 113 from the first user device 105A and enable corresponding information 115 to be provided to the second user device 105B. The information 113 that is received from the first user device 105A can relate to the sensations that are being experienced by the first user 103A. The information 115 that is provided from the network 109 to the second user device 105B can comprise information indicative of target sensations that are to be provided to the second user 103B. This information can be used to control stimuli that are provided to the second user 105B.

In some examples the network 109 can comprise one or more processing devices. The processing devices could be configured to process information 113 provided by the first user device 105A and/or information provided by the second user device 105B. For example, the network 109 could be configured to receive information 113 about the sensations felt by the first user 103A from the first user device 105A and could be configured to convert this information into a generic sensation profile. The generic sensation profile could then be provided to one or more second user devices 105B.

In some examples the network 109 could be configured to receive information about the sensations felt by the first user 103A from the first user device 105A and also personal information 119 relating to a second user 103B of a second user device 105B. The network may be configured to convert this information into a personalised sensation profile. The personalised sensation profile could then be provided to the corresponding second user devices 105B.

The information relating to the target sensations for the second user 103B can be personalised for the second user 103B. This can take into account different physiological differences between the first user 103A and the second user 103B. This personalisation can take into account the physiological features of sensory nerves and receptors of the second user 103B. This can take into account the fact that different users have different numbers of sensory nerves and receptors and that these will be in different locations. Therefore, to enable the second user 103B to experience the same sensations as the first user 103A these physiological differences can be taken into account.

In some examples the second user device 105B can be configured to obtain information relating the physiological features of the sensory nerves and receptors of the second user 103B. Information indicative of the information relating the physiological features of the sensory nerves and receptors of the second user 103B can be indicated in a personalised sensory map of the second user 103B. The personalised sensory map could be obtained by the second user device 105B. In some examples the personalised sensory map could be obtained by a different device and stored in the second user device 105B and/or the network 109 or other suitable location.

The second user device 105B can be configured to control sensations experienced by the second user 103B. The sensations experienced by the second user 103B can be controlled by controlling stimuli provided to the second user 103B. The stimuli can be applied to the skin of the second user 103B or to any other suitable part of the second user 103B. The stimuli provided to the second user 103B comprise a plurality of stimulating electrical signals provided by a plurality of electrodes positioned on the second user 103B and/or any other suitable means.

The system 101 shown in Fig. 1 therefore enables sensations felt by a first user 103A to be transferred to one or more second users 103B. This is achieved by collecting information relating to the sensation or sensations experienced by the first user 103A and personalising the information for use by the second user 103B. The personalisation takes into account the unique features of the second user's 103B sensory nerves and receptors.

In some examples the system 101 of Fig. 1 can also comprise a content provider 107. The content provider 107 can be configured to generate sensation profiles or other information relating to target sensations without measuring them or detecting them from a first user 103A. For example, the content provider 107 could provide mediated reality or other content. This could include information 113 relating to sensations that are to be experienced by the second user 103B. This information 113 could then be provided from the content provider 107 to the network 109 and accessed by the second user device 105B.

Therefore, the system 101, and or variations of the system, can be configured to enable artificial target sensations to be generated instead of, or in addition to, measured or detected sensations. The artificial target sensations can be personalised for the second user 103B by using a personalised sensory map in the same way that the sensations detected from the first user 103A can be personalised.

Fig. 2 shows an example method that could be implemented using the system 101 of Fig. 1 or any other suitable system 101. The method shown in Fig. 2 could be implemented by the second user device 105B or an apparatus such as a controller within the second user device 105B.

At block 201 the method comprises obtaining a personalised sensation profile for a user 103B. The user could be a second user 103B as shown in Fig. 1. The user 103B could be an end user 103B who is to experience sensations transferred from a different location or source.

The personalised sensation profile indicates target sensations that are to be provided to the user 103B. The sensation profile is personalised in that it takes into account physiological features of a plurality of sensory nerves and receptors of the user 103B. That is, different users 103B have different personalised sensation profiles based on the differences between the physiological features of their sensory nerves and receptors. The physiological features of their sensory nerves and receptors can comprise the locations, types, and functions of the sensory nerves and receptors within the skin of the second user 103B and/or any other suitable factor. The sensory nerves and receptors that are accounted for can comprise heat receptors, cold receptors, pain receptors, itch sensitive receptors, hair movement receptors, mechanoreceptors.

In some examples the personalised sensation profile can be generated by obtaining a personalised sensory map for the user 103B and a generic sensation profile. The personalised sensory map for the user 103B can then be used to modify the generic sensation profile. The generic sensation profile comprises information relating to target sensations for an end user but is not specifically associated with any end user. The generic sensation profile could be generated by a content provider 107 and/or could be generated from information obtained by using a first user device 105A to monitor sensations experienced by a first user 103A. The generic sensation profile comprises information relating to target sensations that is configured to be personalised for use for a specific end user 103B.

The target sensations can correspond to one or more sensations experienced by a different user. For example, the target sensations can comprise sensations experienced by the first user 103A and detected by the first user device 105A. In some examples the target sensations could comprise artificial sensations that are generated by a content provider 107 or originate from any other suitable source.

The personalised sensory map indicates the physiological features of a plurality of sensory nerves and receptors of the user 103B. The personalised sensory map is unique to the user 103B. Different end users 103B will have different personalised sensory maps.

The personalised sensory map can be generated by the second user device 105B. For example, the second user device 105B could comprise means for detecting the positions and other features of the sensory nerves and receptors of the user 103B. The means could comprise one or more stimulators and one or more optical devices or any other suitable means.

In some examples a different device could be used to generate the personalised sensory map. For instance, a specialised scanning device could be used to scan the user 103B and generate the personalised sensory map. The personalised sensory map could then be stored in the user device 105B and/or network 109 as appropriate.

The personalised sensory map does not need to be generated every time the method is implemented. For instance, a personalised sensory map could be generated the first time a user 103B uses the system 101. This personalised sensory map could then be stored in the second user device 105B, or network 109 or other suitable location and used, as appropriate, for subsequent implementations of the method.

Any suitable process can be used to generate the personalised sensory map. In some examples the personalised sensory map can be generated by applying a stimulating electrical input signal to the user 103B so as to cause optically detectable changes of the plurality of sensory nerves and receptors of the user 103B. The optically detectable changes could comprise changes in one or more of, refractive index, birefringence, fluorescence or any other suitable optical property. One or more optical devices can then be used to detect the optically detectable changes. The optical devices can comprise one or more OCT devices or any other suitable type of device.

The outputs of the optical devices can therefore comprise information relating to the locations, type and function of sensory nerves and receptors of the second user 103B. This information can then be used to generate the personalised sensory map.

In some implementations of the method the obtaining of the personalised sensation profile by the second user device 105B comprises receiving a generic sensation profile from a network 109 or other suitable location and then personalising the generic sensation profile to account for the locations, or other features, of the sensory nerves and receptors of the user 103B. In such examples the second user device 105B could use the personalised sensory map to adapt a received generic sensation profile.

In some implementations of the method the obtaining of the personalised sensation profile by the user device 105B comprises receiving the personalised sensation profile from a network device or other suitable location. In such examples the user device 105B would not need to perform any processing on the information received from the network 109, or would only perform limited processing on the information received from the network 109 so as to obtain the personalised sensation profile. In such examples the network 109 could use the personalised sensory map to adapt a received generic sensation profile for use by the end user 103B.

At block 203 the method comprises using the personalised sensation profile to control stimuli provided to the user 103B. The stimuli are controlled so as to generate sensations for the user 103B corresponding to the personalised sensation profile. This enables sensations to be transferred to the user 103B.

Any suitable means can be used to provide the stimuli to the user 103B. In some examples the stimuli provided to the user 103B comprise a plurality of stimulating electrical signals that can be provided by a plurality of electrodes positioned on the user 103B. For example, the electrodes could be galvanically connected to the skin of the user 103B.

Information from the personalised sensation profile can be used to control one or more parameters of the electrical stimulating signal signals provided by the electrodes to the user. The one or more parameters of the electrical stimulating signals that are controlled comprise amplitude, frequency, duration, cycle, pattern, shape of the electrical stimulating signals or any other suitable parameter or combination of parameters.

In some examples the plurality of electrodes that provide the stimuli can be provided within a wearable device. The wearable device could be a garment or any other suitable type of wearable device. In some examples the wearable device could comprise a sleeve that is positioned on a user's arm and any other parts that can be positioned on any other suitable part of the user's body.

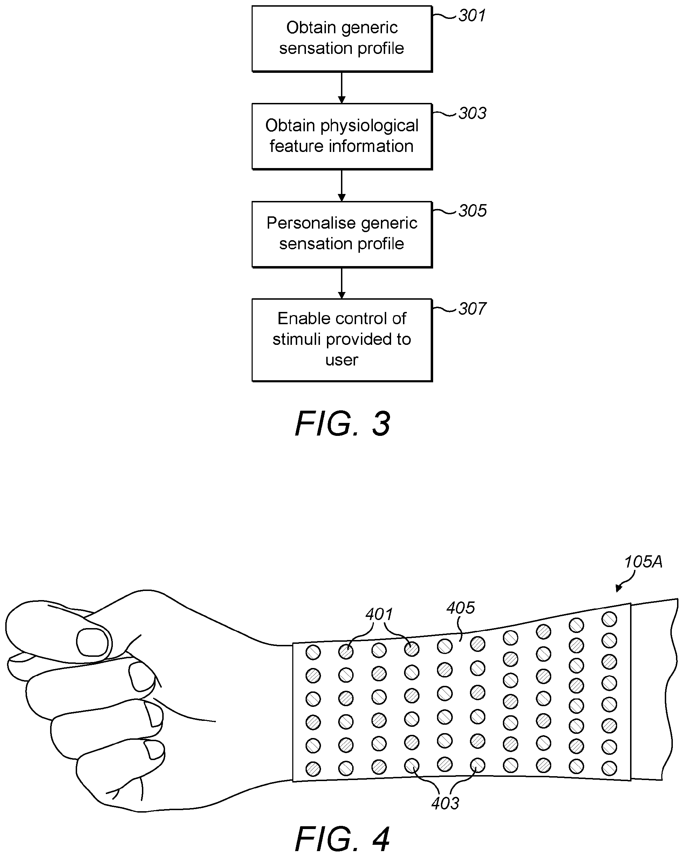

Fig. 3 shows another example method that could be implemented using the system 101 of Fig. 1 or any other suitable system 101. The method shown in Fig. 3 could be implemented by the network 109 or any other suitable device or combination of devices.

At block 301 the method comprises obtaining a generic sensation profile indicative of target sensations that are to be provided to a user 103B. The user 103B could be a second user 103B as shown in Fig. 1. The user could be an end user 103B who is to experience sensations transferred from a different location.

The generic sensation profile comprises information relating to target sensations for an end user but is not specifically associated with any end user. The generic sensation profile could be generated by a content provider 107 and/or could be generated from information obtained by using a first user device 105A to monitor sensations experienced by a first user 103A. The generic sensation profile comprises information relating to target sensations that is configured to be personalised for use for a specific end user 103B.

At block 303 the method comprises obtaining information indicative of physiological features of a plurality of sensory nerves and receptors of the user 103B. The information indicative of physiological features of a plurality of sensory nerves and receptors of the user 103B can be provided within a personalised sensory map.

The personalised sensory map can be obtained from the second user device 105B or any other suitable source. In some examples the personalised sensory map could be stored in the network 109 and retrieved as needed.

At block 305 the method comprises personalising the generic sensation profile to account for the physiological features of a plurality of sensory nerves and receptors of the user 103B. The personalising of the generic sensation profile can comprise adapting the sensations within the generic profile to account for the physiological features of the plurality of sensory nerves and receptors of the user 103B. For instance, if the physiological features of a plurality of sensory nerves and receptors of the user 103B are such that they would be more receptive to a type of sensation than the first user 103A (as reflected from the optical imaging of the nerves and receptors of the first user 103A), or a generic user, then the target sensations could be decreased in intensity so that the end user 103B feels the sensations with the correct intensity. In some examples adapting the generic profile can comprise adapting the position at which the stimuli are to be applied. For example, the positions of the sensory nerves and receptors of the user 103B can determine where the stimuli should be applied in order to recreate a target sensation.

At block 307 the method comprises enabling the personalised sensation profile to be used to control stimuli provided to the user 103B. The personalised sensation profile enables the stimuli to be controlled to generate sensations corresponding to the target sensations of the generic sensation profile. Enabling the use of the personalised sensation profile for controlling stimuli provided to the user 103B can comprise transmitting the personalised sensation profile from the network 109 to the second user device 105B or to any other suitable device for controlling the stimuli provided to the user 103B.

The stimuli provided to the user 103B comprise a plurality of stimulating electrical signals. The stimulating electrical signals can be provided by a plurality of electrodes positioned on the user 103B. For example, the electrodes could be galvanically connected to the skin of the user 103B. The stimulating electrical signals can be controlled by the user device 105B or by any other suitable controller apparatus. Information from the personalised sensation profile can be used to control the electrical signals provided by the plurality of electrodes so as to recreate the target sensations for the end user 103B. The parameters of the electrical stimulating signal signals that are controlled comprise amplitude, frequency, duration, cycle, pattern, shape of the electrical stimulating signals or any other suitable parameter or combination of parameters.

In some examples the plurality of electrodes that provide the stimuli can be provided within a wearable device. The wearable device could be a garment or any other suitable type of wearable device. In some examples the wearable device could comprise a sleeve that is positioned on a user's arm and any other parts that can be positioned on any other suitable part of the user's body.

Fig. 4 shows an example device 105A that could be used to obtain information about sensations experienced by a user 103A. The user 103A could be a first user 103A as shown in Fig. 1 or any other suitable type of user.

The device 105A as shown in Fig. 4 can be a first user device 105A as shown in Fig. 1. In the example shown in Fig. 4 device 105A comprises a sleeve 405, a plurality of electrodes 401 and a plurality of optical devices 403. The first user device 105A can also comprise other components that are not shown in Fig. 4, for example, the user device 105A can comprise an apparatus configured to control the user device 105A.

The sleeve 405 provides a garment or part of a wearable device that can be worn by a user 103A. In some examples the sleeve 405 can comprise part of a garment such as a shirt or other item. In some examples the user device 105A could comprise a plurality of separate wearable components.

The sleeve 405 can be configured so that it can be worn by the user 103A for an extended period of time. For example, the sleeve 405 can be light-weight and comfortable enough for the user 103A to wear while the play a game or interact with mediated reality content or perform any other suitable activity. This can enable the user 103A to be monitored while they play the game or interact with mediated reality content or perform any other suitable activity.

In some examples the user 103A could be monitored while they are resting or sleeping. This can enable the sensations that user 103A experiences while they are wearing the device 105A to be detected.

In the example of Fig. 4 the sleeve 405 is provided on the forearm of the user 103A. The sleeve 405 could be provided in other locations in other examples. For example, it could be configured to cover the user's hand or part of the hand or any other suitable part of the user's body.

As shown in Fig. 4 the user device 105A comprises a plurality of electrodes 401. The electrodes 401 are positioned within the sleeve 405 so that when the sleeve 405 is worn by the user, the electrodes 401, or at least some of the electrodes 401, can be galvanically connected to the users' skin. This can enable electrical stimulating signals to be input from a first electrode 401 and detected by another electrode 401.

The plurality of electrodes 401 are distributed throughout the sleeve 405 so as to enable electrical stimulating signals to be input to and detected from different parts of the user's arm. The position of electrodes 401 can therefore determine which parts of the user's arm are stimulated by the electrical stimulating signals.

The electrodes 401 can comprise two-dimensional materials such as graphene or thin layers of metal or any other suitable conductive materials. The electrodes 401 can be flexible so that they can conform to the skin of the user 103A and/or form part of a wearable device.

The electrical stimulating signals provided by the electrodes 401 stimulate the user's skin to generate a response from the sensory nerves and receptors within the stimulated part of the skin. This response of the sensory nerves and receptors produces an optically detectable response of the user's skin. This can be caused by an impulse response travelling along a sensory receptor or by any other factor.

The electrodes 401 can be controlled so that the electrical stimulating signals penetrate into the skin of the user 103A. For example, the electrical stimulating signals can penetrate beneath the skin of the user 103A. The depth to which the electrical stimulating signals penetrate can be controlled by controlling one or more parameters of the electrical stimulating signals.

The user device also comprises a plurality of optical devices 403. The plurality of optical devices 403 are positioned within the sleeve 405 so that when the sleeve 405 is worn by the user the optical devices 403, or at least some of the optical devices 403, can be optically connected to the users' skin. This can enable light reflected or refracted from the user's skin to be detected by one or more of the optical devices 403.

The plurality of optical devices 403 are distributed throughout the sleeve 405 so as to enable light to be detected from different parts of the user's arm. The position of optical devices 403 can therefore determine which parts of the user's arm are monitored for sensations.

The plurality of optical devices 403 are configured to detect the optically detectable responses within the user's skin. In the example of Fig. 4 the plurality of optical devices 403 can comprise imaging optics of OCT devices. Other types of optical device could be used in other examples of the disclosure.

The optical devices 403 can comprise a light source that is configured to generate an emitted beam of light. Where the optical devices 403 comprise an OCT device, the emitted beam of light can comprise one or more low coherence beams of light. The one or more low coherence beams of light can be any suitable wavelength.

The beam of light that is emitted by the light source can comprise any suitable wavelength. Where the optical devices 403 comprise an OCT device, the light source can use near infrared light to scan part of the user's skin. The OCT device can use light of a wavelength between 850nm and 1050nm. Other wavelengths of light could be used in other examples.

If an OCT device is used, the OCT device could be a speckle-modulated OCT which is sensitive to small morphology changes, or a polarization-sensitive OCT which can highlight birefringence of nerve tissue or other suitable part of the user's skin or any other suitable type of OCT device.

The optical devices 403 can also comprise one or more sensors that can be configured to detect light that has been reflected or scattered from the user's skin. The light from the optical devices 403 that is incident on the user's skin can be reflected or scattered by internal structures within the user's skin such as the sensory nerves and receptors. The amount of the light that is reflected or scattered can be dependent upon one or more physical characteristics of the sensory nerves and receptors and/or other parts of the user's skin. The amount of the light that is reflected or scattered, and other parameters of the light that is reflected or scattered, can be dependent upon the properties of the internal structures within the user's skin. The properties can change in response to the application of the electrical stimulating signals from the electrodes 401. For example, the depolarization and the repolarization of an axon of sensory receptors as a pain signal is passed through the sensory receptors and the axon can affect the light that is reflected or scattered by the user's skin.

The optical devices 403 can be configured to have a refresh rate that is faster than the neural firing rates of the sensory nerves and receptors that are being monitored by the optical devices 403. For instance, a Meissner's Corpuscle is a mechanoreceptor responsible for detecting skin deformation and vibration. This has a physiological impulse frequency of 5-50 Hz. Pacinian Corpuscles are mechanoreceptors responsible for detecting high frequency vibrations. These have a physiological impulse frequency of up to 500Hz. Therefore, in order to enable stimulation of a Meissner's Corpuscle or a Pacinian Corpuscle to be detected by the optical devices 403 it needs to have a refresh rate faster than this.

In this example the optical devices 403 are small and lightweight devices. The optical devices 403 could comprise optical assemblies that have a diameter of the order of a few millimeters. This can enable the optical devices 403 to be moved to different positions so that they can be used to scan different parts of the user's skin. It can also enable the optical devices to be worn by the user while the user moves. In some examples the optical devices 403 can comprise the optical components, such as the light emitter and the light sensors, on a single chip or in a chip-sized arrangement. In some examples each optical device 403 could comprise its own emitter. In other examples a single emitter could provide light for detection by a plurality of different optical devices 403.

In the example of Fig. 4 the optical devices 403 and the electrodes 401 are distributed throughout the sleeve in an alternating array. Other arrangements could be used in other examples of the disclosure.

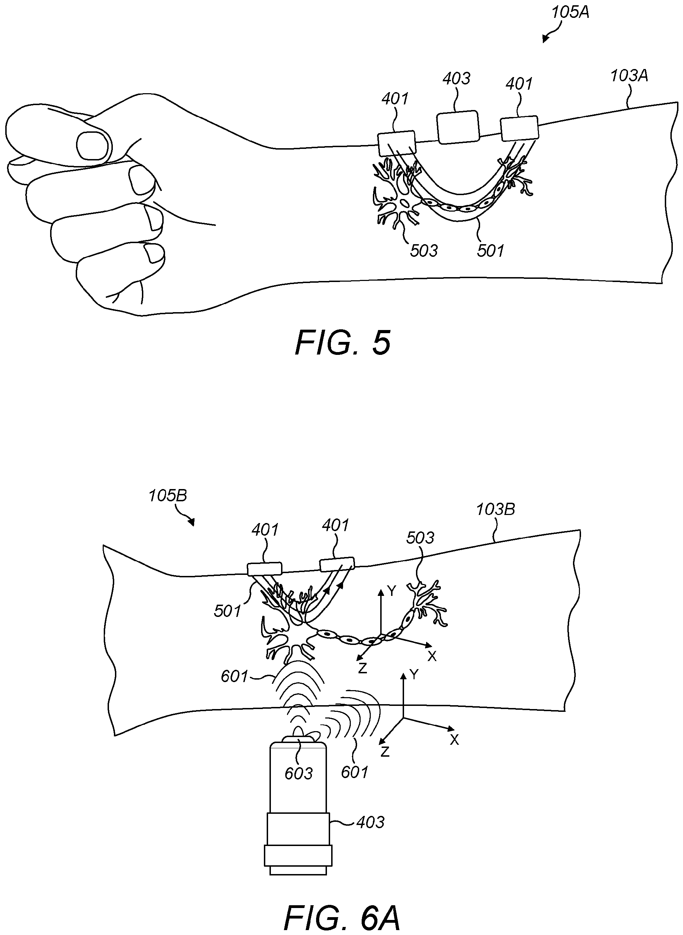

Fig. 5 schematically shows part of the first user device 105A in use. In the example of Fig. 5 only two of the electrodes 401 and one of the optical sensors 403 are shown for clarity. Any number of electrodes 401 and optical sensors 403 could be used. The sleeve 405 is also not shown in Fig. 5 for clarity.

In the example of Fig. 5 the part of the user 103A that is being monitored by the device 105A is the forearm of a person. Other parts of a person and/or animal could be monitored and/or analysed in other examples of the disclosure.

The electrodes 401 are positioned on the forearm of the user 103A and enable electrical stimulating signals 501 to be provided to the skin of the user 103A. In the example of Fig. 5 example two electrodes 401 are shown and the electrical stimulating signals 501 pass from a first electrode 401, through the skin of the user 103A and to the second electrode 401. The position of electrodes 401 can therefore determine which parts of the skin of the user 103A are stimulated by the electrical stimulating signals 501.

Different parts of the skin of the user 103A can be stimulated and analysed by positioning the electrodes 401 in different positions around the user's body. For instance, the electrodes 401 can be positioned on the user's forearm for a first set of measurements and then could be positioned on the user's upper arm or the back of their hand or in any other suitable location for another set of measurements.

The electrical stimulating signals 501 stimulate the skin of the user 103A to generate a sensory response within the sensory nerves and receptors 503 of the user 103A. One example sensory receptor 503 is shown in Fig. 5. It is to be appreciated that any number of sensory nerves and receptors 503 could be located within the area of the user's skin that is being monitored. Also, the sensory receptor 503 is not shown to scale in Fig. 5.

The electrical stimulating signals 501 produce optically detectable changes within the sensory nerves and receptors 503. These can be caused neurological impulses travelling along the sensory nerves and receptors 503 or by any other factor. The sensory nerves and receptors 503 can be polarized, depolarized and repolarized. These changes in polarization state can be caused by charged electrolytic ions moving in and out of the cells of the sensory nerves and receptors 503 via specialized cellular mechanisms. This can generate a transmembrane voltage across the sensory nerves and receptors 503 or parts of the sensory nerves and receptors 503. Therefore, by stimulating the areas of the skin comprising the sensory nerves and receptors 503 with electrical stimulating signals 501 having appropriate parameters these responses can be activated. The surrounding tissues such as muscles and fats and interstitial fluids would not respond to the electrical stimulating signals 501. This therefore enables selective activation of the sensory nerves and receptors 503

The electrical stimulating signals 501 provided by the electrodes 401 can be controlled so as to penetrate into the skin of the user 103A. The depth to which the electrical stimulating signals 501 penetrate can be controlled by controlling one or more parameters of the electrical stimulating signals 501, such as frequency or any other suitable parameter.

The optical devices 403 are configured to detect the optically detectable changes within the sensory nerves and receptors 503. In the example of Fig. 5 the optical device 403 comprises an OCT device. Other types of optical device 403 could be used in other examples of the disclosure. Only one optical device 403 is shown in Fig. 5 however other numbers of optical device 403 could be used in other examples.

The optical devices 403 can comprise a light source that is configured to generate an emitted beam of light. Where the optical devices 403 comprises an OCT device the emitted beam of light can comprise one or more low coherence beams of light. The one or more low coherence beams of light can be any suitable wavelength.

The optical devices 403 can also comprise one or more sensors that are configured to detect light that has been reflected or scattered from the skin of the user 103A. The light from the optical devices 403 that is incident on the skin of the user 103A can be reflected or scattered by internal structures such as the sensory nerves and receptors 503. The amount of the light that is reflected or scattered can be dependent upon one or more physical characteristics of the sensory nerves and receptors 503. The amount of the light that is reflected or scattered, and other parameters of the light that is reflected or scattered, can be dependent upon the properties of the sensory nerves and receptors 503 such as the transmembrane potentials. The properties can change in response to the application of the electrical stimulating signals 501 and/or the application of an external stimulus. For example, the depolarization and the repolarization of the axon 117 of the sensory receptors 113 as a pain signal is passed through sensory receptor 113 can affect the light that is reflected or scattered by the biological sample 103.

When the apparatus 105A is being used to obtain information about sensations experienced by the user 103A the electrical stimulating signals 501 can be applied to enable a steady state output to be detected. This enables the steady state or general status of the sensory nerves and receptors 503 of the user 103A to be monitored. The optical device 403 can enable this steady state to be detected and monitored. If an external stimulus is experienced by the user 103A this can trigger a response within the sensory nerves and receptors 503. This response to the external simuls would cause a change in one or more physical characteristics of the sensory nerves and receptors 503. For instance, it can cause a change in a transmembrane potential as an impulse is transferred along one or more sensory nerves and receptors 503. This change from the steady state can be detected by the optical devices 403 and used to provide an indication of a sensation experienced by the first user 103A.

Figs. 6A to 6C schematically show a device 105B that can be used to identify features of sensory nerves and receptors 503. The device 105B could be a second user device 105B as shown in Fig. 1 or any other suitable type of device. The user device 105B can be configured to scan a user 103B or part of a user to determine features of the sensory nerves and receptors 503. The same device 105B could be used both to scan the user 103B and to provide target sensations to the users 103B. In other examples different devices could be used for each of these functions. For example, a dedicated scanning device could be configured to scan the user 103B and identify features of sensory nerves and receptors 503 and a different user device 105B could be used to provide the target sensations.

Fig. 6A schematically shows components of the device 105B. In this example the device 105B comprises a plurality of electrodes 401 and one or more optical devices 403. These are shown as separate components in Fig. 6A. In some examples they could be provided in a single wearable or portable device.

The electrodes 401 used in the device in Fig. 6A can comprise any suitable type of electrodes. The electrodes 401 could be similar to the electrodes 401 shown in Figs. 4 and 5. When the device 105B is in use the electrodes 401, or at least some of the electrodes 401, can be galvanically connected to the users' skin. This can enable electrical stimulating signals 501 to be input from a first electrode 401 and detected by another electrode 401.

The device 105B can comprise a plurality of electrodes 401 configured so as to enable electrical stimulating signals to be input to and detected from different parts of the user's arm or other part of their body. The position of electrodes 401 can therefore determine which parts of the user's arm or body are stimulated by the electrical stimulating signals 501.

The electrodes 401 can comprise two-dimensional materials such as graphene or thin layers of metal or any other suitable conductive materials. The electrodes 401 can be flexible so that they can conform to the skin of the user 103B and/or form part of a wearable device.

The electrical stimulating signals provided by the electrodes 401 stimulate the user's skin to generate a response within the sensory nerves and receptors within the stimulated part of the skin. This response of the sensory nerves and receptors produces an optically detectable response of the user's skin. This can be caused by an impulse response travelling along a sensory receptor or by any other factor. This can be similar to the response detected by the first user device 105A and described above.

The electrodes 401 can be controlled so that the electrical stimulating signals penetrate into the skin of the user 103B. For example, the electrical stimulating signals can penetrate beneath the skin of the user 103B. The depth to which the electrical stimulating signals penetrate can be controlled by controlling one or more parameters of the electrical stimulating signals.

The device 105B shown in Fig. 6A also comprises at least one optical device 403. The optical device 403 can be positioned so that light reflected or refracted from the user's skin can be detected by the optical device 403.

Only one optical device 403 is shown in Fig. 6A. This could be a moveable optical device 403 that can be moved relative to the positioned of the user 103B and/or the electrodes 401 positioned on the user 103B. this could enable the same optical device 403 to be used to scan different parts of the same user. For instance, the optical device 403 could comprise a probe shaped device that could be moved around the user as appropriate. In other examples a plurality of different optical devices 403 could be positioned in different locations so as to enable different parts of the users' body to be scanned.

The optical devices 403 are configured to detect the optically detectable responses within the user's skin. In the example of Fig. 6A respective ones of the plurality of optical devices 403 can comprise a respective OCT device. Other types of optical device 403 could be used in other examples of the disclosure.

The optical devices 403 can comprise one or more light sources and a beam steering assembly 603. In some examples respective light sources can be provided for respective optical devices 403. In other examples a single light source can provide light for a plurality of different optical devices 403.

The light sources are configured to provide emitted beams of light 601. Where the optical devices 403 comprise an OCT device the emitted beam of light can comprise low coherence beams of light at any suitable wavelength.

The beam steering assembly 603 can comprise mirrors or phase arrays or any suitable optical assembly that enables steering of the beams of the light 601. This beam steering assembly 603 can be configured to enable lateral scanning of the beams of the light 601. This can enable different parts of the user 103B to be scanned by the same light source.

The example of Fig. 6A shows beams of light 601 from the light source being emitted in different angular directions. A first angular direction is directly in front of the optical device 403 and a second angular direction is to the right of the optical device 403. The beams of light 601 could be directed in other directions in other examples. The beam steering assembly can enable the beams of light 601 to be moved between the different angular directions.

The amount of light refracted or reflected can provide information about the type and/or function of the sensory nerves and receptors 503. The timing of the detecting of the reflected or refracted light can provide information about the location of the sensory nerves and receptors 503.

The optical devices 403 can also comprise one or more sensors that can be configured to detect light that has been reflected or scattered from the user's skin. The light can be reflected or scattered from the surface of the user's skin or from internal structures within the user's skin.

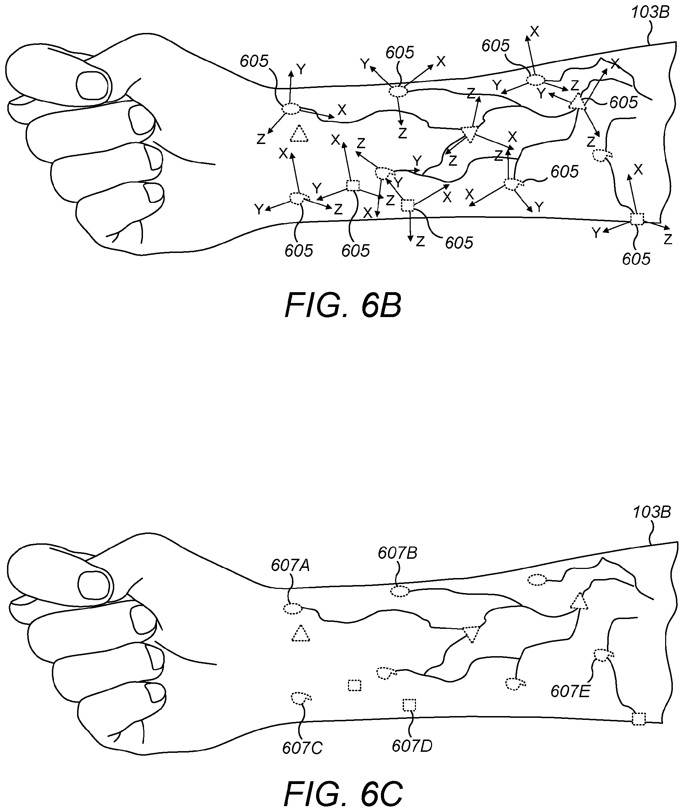

The electrodes 401 and the optical devices 403 can be positioned to enable the forearm of the user 103B to be scanned. This can enable the locations of different sensory nerves and receptors 503 to be scanned and identified. Fig. 6B schematically shows a plurality of different sensory nerves and receptors 503 within the user's forearm. These sensory nerves and receptors 503 are not shown to scale in Fig. 6B.

The sensory nerves and receptors 503 can be assigned a coordinate location. The coordinate location can provide an indication of the location of the respective sensory nerves and receptors 503 within the skin of the user. The coordinate location can provide an indication of the depth of the sensory nerves and receptors 503. The coordinate location can provide an indication of the location of the sensory nerves and receptors 503, for example it can indicate the distance from the skin surface, user's hand or elbow or distance relative to any other suitable reference.

In the example of Fig. 6B a plurality of the sensory nerves and receptors 503 have been tagged with coordinate location information 605. This is indicated by a set of coordinate axis in Fig. 6B. The coordinate location information 605 can comprise any suitable information that indicates the location of the sensory nerves and receptors 503. The tagging of the sensory nerves and receptors 503 with coordinate location information 605 can comprise storing the information indicating the coordinate location information 605 of individual ones of the sensory nerves and receptors 503 in such a manner that it can be referenced to the associated sensory nerves and receptors 503.

Fig. 6C schematically shows the labelling of the plurality of different sensory nerves and receptors 503 within the user's forearm. These sensory nerves and receptors 503 are not shown to scale in Fig. 6C.

A label 607A-607E is assigned to individual ones of the sensory nerves and receptors 503. In this example each of the labels 607 shown is a different label. This can indicate that each of the sensory nerves and receptors 503 is a different type or category of sensory nerves and receptors 503. In some examples two or more of the sensory nerves and receptors 503 can be the same type or category of sensory nerves and receptors 503 and so could be assigned the same label.

The labelling can comprise information indicating the type or category of individual ones of the sensory nerves and receptors 503. For example, it can indicate whether the sensory nerves and receptors 503 are Ruffini corpuscles, Meissner corpuscle, pain receptors, Merkle corpuscles, Pacinian Corpuscles, thermal receptors or any other suitable type of sensory nerves and receptors 503.

The type or category of the sensory nerves and receptors 503 can be determined based on the light that is reflected and/or refracted by the sensory nerves and receptors 503. Different electrical stimulating signals 501 from the electrodes 401 can be used to target different types of sensory nerves and receptors 503 and generate different responses. For example, electrical stimulating signals 501 having a first frequency could be used to generate a transmembrane potential in a first type of sensory nerve and receptor 503 while an electrical stimulating signal 501 having a second frequency could be used to generate a transmembrane potential in a second type of sensory nerve and receptors 503. Therefore, by monitoring the parameters of the input signal that generate the responses from the sensory nerves and receptors 503, the type and/or category of the sensory nerves and receptors 503 can be identified. In some examples, a library or look-up table or other similar resource can be used to identify the sensory nerves and receptors 503 based on the detected responses to the electrical input signals 501.

The labelling of the sensory nerves and receptors 503 can comprise storing the information indicating the type or category of individual ones of the sensory nerves and receptors 503 in such a manner that it can be referenced to the associated sensory nerves and receptors 503.

The information obtained by the device 105B can therefore be used to obtain a sensory map. The sensory map indicates the physiological features of the sensory nerves and receptors 503. The sensory map can indicate the locations and type of category of the sensory nerves and receptors 503 and/or can indicate any other suitable information.

The sensory map that is obtained by the device 105B can be a personalized sensory map. The personalized sensory map can be generated based on measurements and/or observations of a specific user 103B. The personalized sensory map can be unique to the associated user 105B.

In the example of Figs. 6A to 6C the plurality of electrodes 401 and optical device 403 are being used to scan and generate a sensory map for the forearm of a user 103B. The electrodes 401 and one or more optical devices 403 could be used to scan any other part of the user's body in other examples of the disclosure.

In the example of Figs. 6A to 6C the electrodes 401 for stimulating the user 103B and the optical device 403 for scanning the user 103B are part of the same electronic device. In other examples the electrodes 401 for stimulating the user 103B and the optical device 403 for scanning the user 103B could be part of different devices. For instance, the optical device 403 could be part of a specialized scanning device that is configured to generate the personalized sensory map of the user 103B.

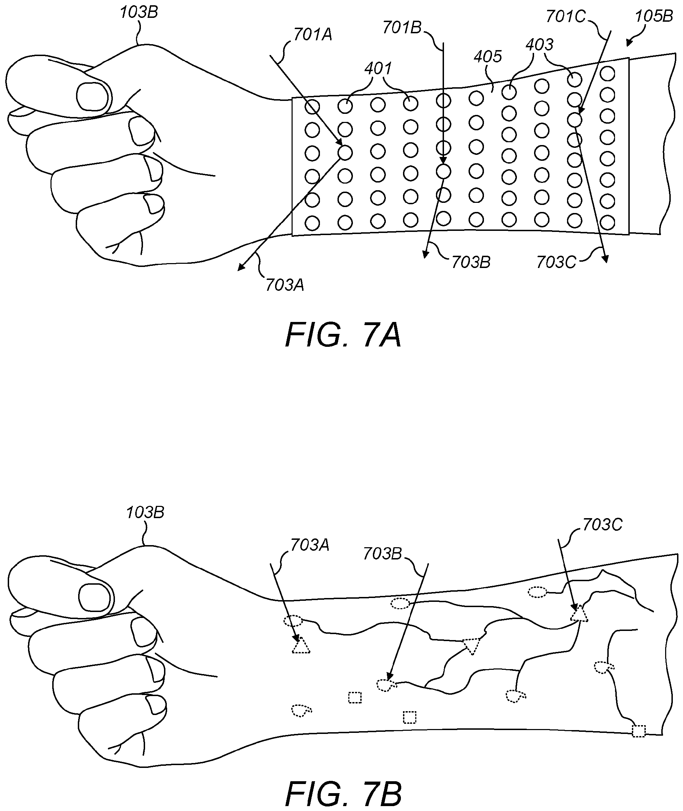

Figs. 7A and 7B schematically show another example user device 105B. The device 105B could be used to provide target sensations to an end user 103B. The end user 103B could be a second user 103B as shown in Fig. 1 or any other suitable type of user.

Fig. 7A schematically shows the device 105B. The device 105B can be a second user device 105A as shown in Fig. 1. In the example shown in Fig. 7A the device 105B comprises a sleeve 405, a plurality of electrodes 401 and a plurality of optical devices 403. These can be the same as, or similar to the, sleeve 405, a plurality of electrodes 401 and a plurality of optical devices 403 used for the first user device 103A as shown in Fig. 4. The second user device 105B can also comprise other components that are not shown in Fig. 7A, for example, the user device 105B can comprise an apparatus such as a controller that can be configured to control the user device 105B.

The plurality of electrodes 401 are distributed throughout the sleeve 405 so as to enable electrical stimulating signals 501 to be input to and detected from different parts of the user's arm. The position of electrodes 401 can therefore determine which parts of the user's arm are stimulated by the electrical stimulating signals 501.

The electrodes 401 are configured to provide stimuli to the second user 105B. The stimuli can be controlled to control the sensations experienced by the user 105B. In this example the stimuli comprise electrical stimulating signals 501. Other types of stimuli could be used in other examples.

The electrodes 401 can be controlled to control one or more parameters of the electrical stimulating signals 501. The one or more parameters that can be controlled can comprise any one or more of amplitude, frequency, duration, cycle, pattern, shape of the electrical stimulating signals or any other suitable parameter. By controlling any one or more of these parameters particular types of sensory nerves and receptors 503 and/or sensory nerves and receptors 503 in particular locations can be stimulated. This can enable target sensations to be generated for the second user 103B.

The plurality of optical devices 403 are also distributed throughout the sleeve 405. This can enable light to be detected from different parts of the user's arm. The position of optical devices 403 can therefore enable different parts of the user's arm to be scanned and/or monitored.

Fig. 7B shows the different sensory nerves and receptors 503 that could be stimulated by the electrodes 401 and monitored by the optical devices 403. The sensory nerves and receptors 503 are not shown to scale in Fig. 7B.

In examples of the disclosure the user device 105B can obtain a personalized sensation profiled for the user 103B. The personalised sensation profile indicates target sensations that are to be provided to the user 103B.

The personalised sensation profile is personalised for the user 103B to take into account physiological features of the plurality of sensory nerves and receptors 503 of the user 103B. The physiological features can comprise the number and/or location of sensory nerves and receptors 503 and/or any other suitable information.

The personalised sensation profile can comprise a plurality of commands 701 indicative of target sensations for the user 103B. For example, the personalised sensation profile can indicate the type of sensation, the location of the sensation, the intensity of the sensation and any other suitable information.

In the example of Fig. 7A, a first command 701A can indicate, for example, that pressure is to be felt in a first location, a second command 701B can indicate that pain, is to be felt in a second location, and a third command 701C can indicate that heat, is to be felt in a third location. Other types of command could be used in other examples of the disclosure.

A controller or other apparatus associated with the user device 105B can convert the command to stimuli that are to be provided to the user 103B. In response to the first command 701A, a first stimulus 703A can be provided. The stimulus can be an electrical input signals from one or more of the electrodes 401. The electrical input signal can be configured to stimulate the appropriate sensory nerves and receptors 503 to enable the target sensation to be experienced. In this case the first command 701A indicated that pressure is to be felt in a first location. To enable this the first stimulus 703A comprises electrical input signals that stimulate pressure nerves in the first location.

Similarly, the second command 701B indicated that pain is to be felt in a second location. To enable this the second stimulus 703B comprises electrical input signals that stimulate pain nerves in the second location. The third command 701C indicated that heat is to be felt in a third location. To enable this the third stimulus 703C comprises electrical input signals that stimulate heat nerves in the third location.

In the example of Figs. 7A and 7B the device 105B is shown on a user's forearm. The device 105B could be used on any part of the user's body in other examples of the disclosure.

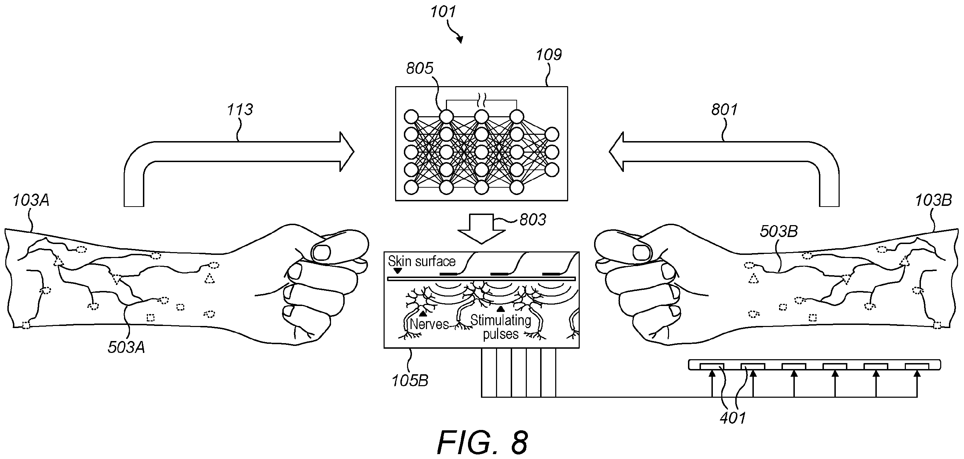

Fig. 8 schematically shows another example system 101 that could be used in some implementations of the disclosure. In this system 101 sensations experienced by a first user 103A are detected and transmitted to a second user 103B. This can enable the second user 103B to experience the same sensations as the first user 103A. This could be part of a game or other type of mediated content.

The first user device 105A is not shown in Fig. 8. The first user device 105A could be as shown in Fig 4 or any other suitable type of device. The first user device 105A is configured to collect information 113 about sensations felt by the first user 103A. The information 113 can comprise information relating to responses of the sensory nerves and receptors 503 of the user 103A. The information 113 can be obtained using optical devices 403 or any other suitable means.

The information 113 can be provided in any suitable format. In some examples the information can be provided in matrix format. The matrix can comprise any suitable number of dimensions. In some examples the matrix could comprise four dimensions. The fourth dimensions of the matrix could correspond to the three dimensions of the physical space within the user's body and a further dimension indicating a sensation that is experienced at that particular location.

The information 113 can comprise a generic sensation profile or any other suitable type of information.

The information 113 can be provided to a network 109. The information 113 can be provided to any suitable device within a network 109.

In the example of Fig. 8 the network 109 also receives a personalised sensory map 801 from the second user 103B. The personalised sensory map 801 can be obtained by a user device 103B such as the device shown in Fig. 6A or by any other suitable type of device. For example, in some implementations a specialised scanning device could be used to scan users and identify features of the sensory nerves and receptors 503 of the user 103B.

The personalised sensory map 801 comprises information relating to features of the sensory nerves and receptors 503 of the user. The features could be the locations, number, types and categories and/or any other characteristic of the sensory nerves and receptors 503 of the user 103B.

The network 109 can be configured to use the personalised sensory map 801 to personalise the information 113 from the first user 103A to provide a personalised sensation profile 803 for the second user 103B. In some examples the network 109 can be configured to adapt a generic sensation profile using the personalised sensory map 801 so as to generate the personalised sensation profile 803.

Any suitable method or process can be used to personalise the information 113 from the first user 103A. In some examples a machine learning program 805 such as a neural network or any other suitable program can be used to personalise the information 113 from the first user 103A.

The machine learning program 805 can be configured to receive the information 113 from the first user 103A and the personalised sensory map 801 as inputs and provide a personalised sensation profile 803 as an output.

The machine learning program 805 can comprise a computer program. The machine learning program 805 can be trained to perform a task, such as creating a personalised sensation profile for a second user 103B, without being explicitly programmed to perform that task.

The machine learning program 805 can be configured to learn from experience E with respect to some class of tasks T and performance measure P if its performance at tasks in T, as measured by P, improves with experience E. In these examples the machine learning program can learn from previous personalised sensation profiles and corresponding generic sensation profiles. The machine learning program 805 can also be a trainable computer program. Other types of machine learning programs could be used in other examples.

Any suitable process can be used to train the machine learning program 805. The training of the machine learning program 805 can be performed using real world/or simulation data. The output of the machine learning program 805 can therefore be based, at least in part, on a past record of sensations experienced by respective users 103A, 103B.

The training of the machine learning program 805 can be repeated as appropriate until the machine learning program 805 has attained a sufficient level of stability. The machine learning program 805 has a sufficient level of stability when fluctuations in the predictions provided by the machine learning program 805 are low enough to enable the machine learning program 805 to be used to predict the personalised sensation profiles 803. The machine learning program 805 has a sufficient level of stability when fluctuations in the predictions provided by the machine learning program 805 are low enough so that the machine learning program 805 provides consistent responses to test inputs.

The personalised sensation profile 803 that is output by the machine learning program 805 provides an indication of the target sensations that are to be provided to the second user 103B.

The personalised sensation profile 803 can comprise a plurality of commands 701 indicative of target sensations for the user 103B or any other suitable information or instructions. The personalised sensation profile 803 can be provided to a second user device 105B. The second user device 105B can be configured to use the personalised sensation profile 803 and any commands or information within that to determine the stimuli that are to be provided to the second user 103B.

The stimuli that are to be provided to the second user 103B determine the control signals 803 that are provided to the electrodes 401 of the second user device 105B. The control signals 803 can control the locations of the electrodes 401 that are actuated. For example, different control signals 803 can be used to actuate different electrodes 401 in different locations of the user device 105B. The control signals 803 can also control other parameters of the stimulating signals provided by the electrodes 401. The other parameters that are controlled can comprise amplitude, frequency, duration, cycle, pattern, shape or any other suitable parameters. The different parameters can control which of the sensory nerves and receptors 503B of the second user 103B are stimulated and the corresponding sensations that are experienced by the user 103B.

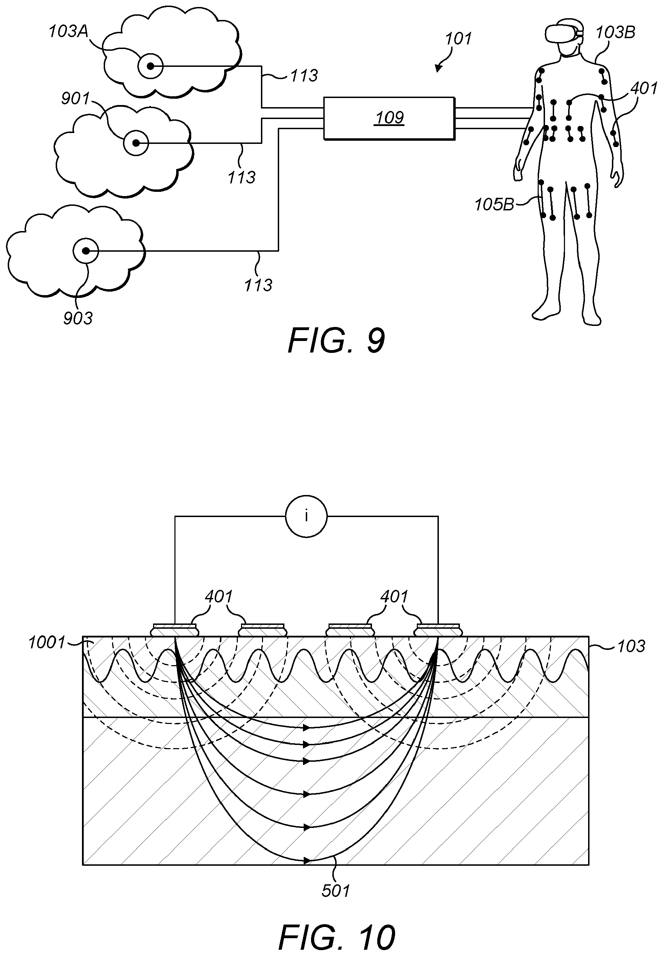

Fig. 9 schematically shows another example system 101 that could be used in some implementations of the disclosure. In this system 101 sensations from a plurality of different origins can be transmitted to a second user 103B. This can enable the second user 103B to experience the different types of sensations. This could be part of a game such as a virtual reality based game or other type of mediated content.

In this example the system 101 comprises a network 109. The network 109 could be a communications network or part of a communications network. The network could comprise a machine learning program as shown in Fig. 8 which can be configured to convert information 113 relating to target sensations into a personalized sensation profile 803 for one or more second users 103B. The machine learning program 805 can be as shown in Fig. 8 or any other suitable means can be used.

In the example of Fig. 9 the second user device 105B comprises a whole-body device. This comprises electrodes 401 positioned all over the user's body. In this example the electrodes 401 are positioned within one or more wearable devices that cover the user's arms, legs and torso. This can enable the stimulating electrical signals 501 to be provided to the user's arms, legs and torso.

The electrodes 401 can be as described in relation to Figs. 6 and 7 or could be any other suitable type of electrodes 401. The second user device 105B could also comprise one or more optical devices 403 which could be as described in relation to Figs. 6 and 7 or could be any other suitable type of optical device 403.

In the example system of Fig. 9 the information 113 relating to the sensations can be in the form of a generic sensation profile, or any other suitable format. The generic sensation profiles can be obtained from any one or more of a plurality of different sources 103A, 901, 903.

A first source 103A as shown in Fig. 9 could be one or more first users 103A. The one or more first users 103A could be wearing first user devices 105A which are corresponding to the second user devices 105B. The corresponding user devices could have electrodes and optical devices 403 in corresponding locations so as to enable the equivalent parts of the first user's body to be monitored for sensations to be provided to the second user's body. For instance, in the example of Fig. 9 the second user device 105B is configured to provide sensations to the second user's arms, legs and torso. To enable corresponding sensations to be detected, the first user' device 105A can be configured to monitor the arms, legs and torso of the first user 103A.

A second source 901 as shown in Fig. 9 could comprise an environmental source. The environmental source 901 could be part of a content provider or any other suitable type of source. The environmental source 901 could comprise one or more sensors that can detect one or more parameters of an environment and enable this information to be felt by the second user 103B. For example, the temperature of an environment could be detected or whether a surface feels hot or cold or rough or smooth could be detected and transmitted in the information 113 to the second user device 105B. This can enable the second user 103B to experience sensations according to an environment without having to be in the environment.

In this case the environmental source 901 provides a real-world stimulus that could generate a sensation if a real user 103B were to experience it. However, in this case the information relating to the sensations can be generated without the user 103B directly experiencing the environment.

A third source 903 as shown in Fig. 9 could comprise a digital source. The digital source 903 could be part of a content provider or any other suitable type of source. The digital source 903 could comprise sources of sensations that originate in virtual or mediated reality content or some other type of content. The digital source 903 could comprise sources of sensations that do not originate in the real world. That is, there need not be a corresponding real-world stimulus to generate the sensations that are to be experienced by the users 103A, 103B.

The information 113 relating to the different types of sensations can provide different types of generic sensation profiles. The different types of generic sensation profiles can be used for different applications. For example, generic sensation profiles from a first user 103A can be used in communication applications and generic sensation profiles from a digital source 903 could be used in game playing applications. Examples of the disclosure could also be used in other applications.

The information 113 relating to the different types of sensations can be combined with a personalised sensory map of the second user 103B to enable a personalised sensation profile to be provided to the second user device 105B.

In the example of Fig. 9 only one second user 103B is shown. In other examples the system 101 could comprise a plurality of second users 103B. In some examples the network 109 could be configured to enable the plurality of second users 103B to feel the same sensations, or corresponding sensations, at the same, or substantially the same, time. For instance, two second users 103B could be in different locations but could be using the same mediated reality content. This could enable the same target sensations to be provided to each of the second users 103B at the same, or substantially similar time.

Fig. 10 shows example electrical stimulating signals 501. The electrical stimulating signals 501 can be provided between two electrodes 401. The electrical stimulating signals 501 can be provided to a first user 103A or to a second user 103B.

When the electrical stimulating signals 501 are provided to a first user 103A they are provided by electrodes 401 of a first user device 105A. The electrical stimulating signals 501 in such examples can be used to enable changes in the response of the first user's 103A sensory nerves and receptors 503 to be optically detected. This enables sensations being experienced by the first user 103A to be monitored.

When the electrical stimulating signals 501 are provided to a second user 103B they are provided by electrodes 401 of a second user device 105B. The electrical stimulating signals 501 in such examples can be used to stimulate the response within the second user's sensory nerves and receptors 503. This enables target sensations to be provided to the second user 103B.

In some examples when the electrical stimulating signals 501 are provided to a second user 103B they can be provided by a scanning device or other device that can be configured to generate a personalized sensory map for the second user 103B. In these examples the electrical stimulating signals 501 can be used to enable the second user's sensory nerves and receptors 503 to be identified and located.

The electrodes 401 are galvanically connected to the surface of the skin 1001 of the user 103. This provides a path for direct electrical current between the electrodes 401 and the user's skin 1001. When the electrical stimulating signals 501 are provided to a user 103 the electrical stimulating signals 501 flow from a first electrode 401 through part of the skin 1001 of the user 103 and to a second electrode 401.

Fig. 10 shows that different electrical stimulating signals 501 can penetrate to different depths of the skin 1001 of the user 103. When the electrical stimulating signals 501 are being used to monitor a first user 103A, controlling the electrical stimulating signals 501 to penetrate to different depths of the user's skin 1001 can enable different parts of the user's skin 1001 to be monitored. When the electrical stimulating signals 501 are being used to stimulate target sensations in a second user 103B, controlling the electrical stimulating signals 501 to penetrate to different depths of the user's skin 1001 can enable different sensory nerves and receptors 503 in different parts of the user's skin 1001 to be stimulated and/or identified.

The depth to which the electrical stimulating signals 501 penetrate can be controlled by controlling the frequency of the electrical stimulating signals 501 or any other suitable parameter. Different frequency ranges of the electrical stimulating signals 501 can be used to provide the electrical stimulating signals 501 to different layers of the user's skin 1001.

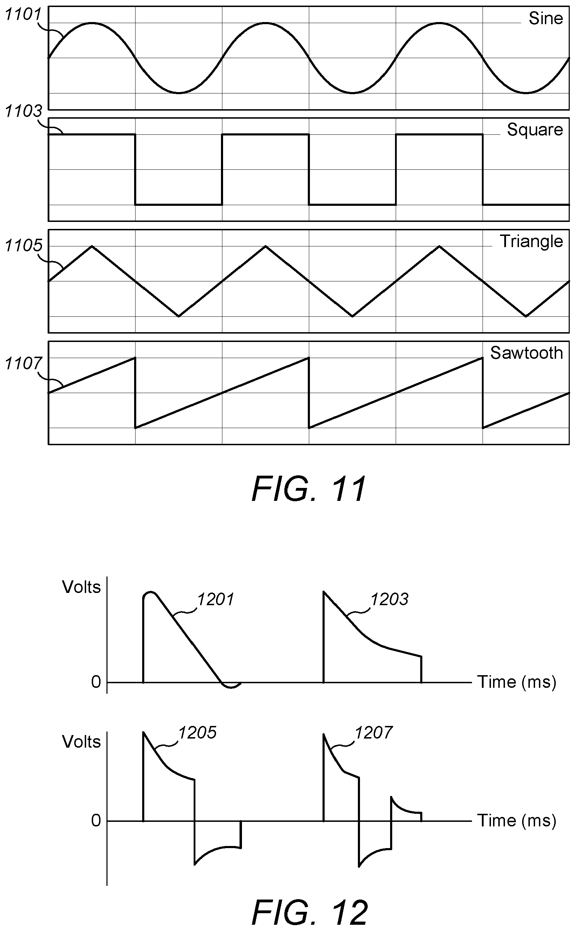

Fig. 11 shows example wave structures that can be used for electrical stimulating signals 501. The different shapes of the wave structures can be used to elicit different responses from the sensory nerves and receptors 503.

Fig. 11 shows four different types of wave structures. Fig.11 shows a sine wave 1101, a square wave 1103, a triangle wave 1105 and a sawtooth wave 1107. Other shapes, or combinations of shapes of waves could be used in various examples of the disclosure.

The different shapes of the wave structures used for the electrical stimulating signals 501 can invoke different properties and responses from the sensory nerves and receptors 503. For example, the square wave has a fast roll-off at the two vertical edges. This can result in fast but very short duration polarization responses within the sensory nerves and receptors 503 with a low-level or zero polarization between the respective responses. Other shapes of the waveforms would result in other types of responses.

Fig. 12 shows more example wave structures that can be used for electrical stimulating signals 501. These different wave structures can also be used to elicit different responses from the sensory nerves and receptors 503. These different wave structures show examples of signals that can have different polarities at different times. The different polarities can affect the responses of the sensory nerves and receptors 503.

The polarity of the electrical stimulating signals 501 refers to whether the applied voltage is positive or negative with respect to a referenced ground.

The first signal 1201 as shown in Fig. 12 comprises a damped sine wave. This has a positive polarity for most of the duration of the signal 1201 and a negative polarity for a short duration at the end of the signal 1201. The different polarities provide two different phases of the signals. This signal can be referred to as a multi-phasic signal. In the specific example of the first signal 1201 the signal comprises two phases. The signal 1201 can therefore be considered to be a bi-phasic signal.

The second signal 1203 in Fig. 12 comprises a truncated exponentially decaying waveform. This has a positive polarity for all of the duration of the signal so that there is only one phase for this second signal 1203. This second signal 1203 is therefore a mono-phasic signal.

The third signal 1205 in Fig. 12 comprises a truncated bi-phase signal with exponential decay. This has a positive polarity for a first part of the signal 1205 followed by a negative polarity for a second part of the signal 1205. The different polarities provide two different phases of the signals so as to provide another example bi-phasic signal.

The fourth signal 1207 in Fig. 12 comprises a truncated tri-phase signal with exponential decay. This has a positive polarity for a first part of the signal 1207, a negative polarity for a second part of the signal 1207, and a positive polarity for a third part of the signal 1207. The different polarities therefore provide three different phases of the signals so as to provide a triphasic signal.

The use of the different phases of different polarities can control the response of the sensory nerves and receptors 503. In the examples shown in Fig. 12 the truncated edges of the waveforms can also be used to control the responses provided by the sensory nerves and receptors 503. Truncated edge signals, such as those shown in Fig. 12, have been shown to induce significant responses when stimulating sensory nerves and receptors 503.

Parameters of the stimulating electrical signals 501 other than those shown in Figs. 10 to 12 can also be controlled. This can enable different sensory nerves and receptors 503 to be stimulated. Other parameters that can be controlled can comprise amplitude, frequency, duration, cycle, pattern, of the electrical stimulating signals or any other suitable parameter.

In some examples the amplitude of the stimulating electrical signals 501 can be controlled. This can enable the intensity of the responses of the sensory nerves and receptors 503 to be controlled. For example, increasing the amplitude of a stimulating electrical signal 501 applied to a second user 103B can increase the intensity of the sensations as experienced by the second user 103B.

The amplitude of the stimulating electrical signals 501 can be large enough to stimulate a response within the sensory nerves and receptors 503 however the amplitude can still be small enough to not cause any discomfort to a user. The amplitude of stimulating electrical signals 501 that are used for monitoring a user 103A can be low enough that they are imperceptible to a user.

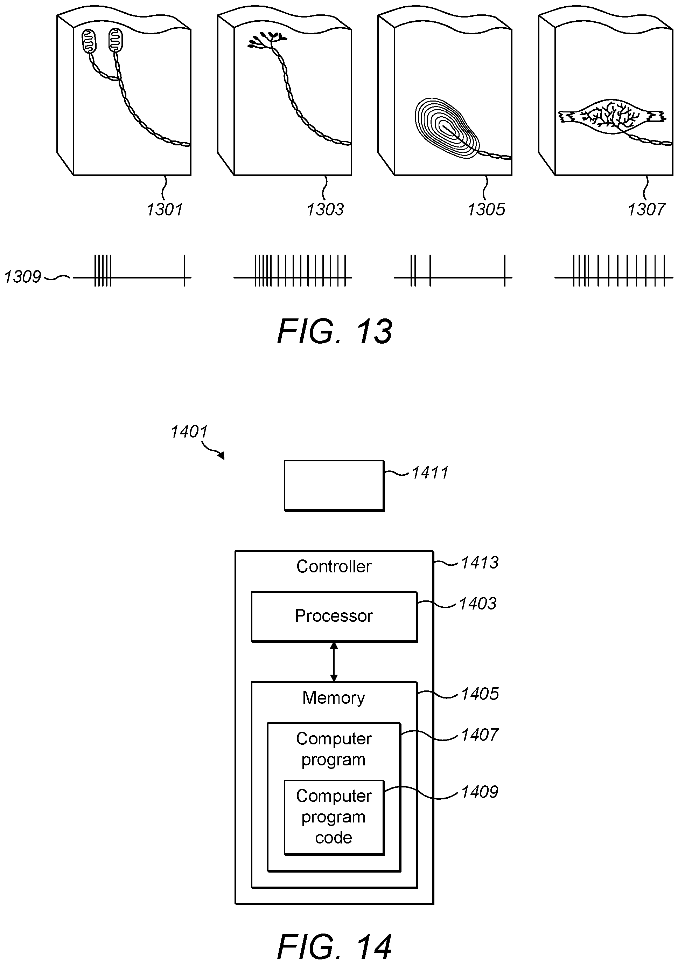

Fig. 13 shows a plurality of different types of sensory nerves and receptors 503 that can be stimulated in different examples of the disclosure. The example of Fig. 13 shows a Meissner's corpuscle 1301, Merkel cells 1303, a Pacinian corpuscle 1305 and Ruffini endings 1307. These sensory nerves and receptors 503 can all detect touch. Other types of sensory nerves and receptors 503 could be stimulated in other examples of the disclosure.

Fig. 13 also shows a corresponding neural spike train 1309 for each of the different sensory nerves and receptors 503 shown. The neural spike trains are different for each of the different types of sensory nerves and receptors 503. The different neural spike trains 1309 represent the bioelectrical response of the different types of sensory nerves and receptors 503 to an external stimulus and/or an electrical stimulating signal 501.

The neural spike trains 1309 have different electrical parameters such as frequencies, phase, shapes, and patterns for the different sensory nerves and receptors 503. This can enable different types of sensory nerves and receptors 503 to be optically detected and stimulated as appropriate.

To enable a target sensation to be recreated for a second user 103B the electrical stimulating input signals 501 can be used to stimulate the sensory nerves and receptors 503 and generate the appropriate neural spike train 1309 within the sensory nerves and receptors 503.

Fig. 14 schematically illustrates an apparatus 1401 that can be used to implement examples of the disclosure. In this example the apparatus 1401 comprises a controller 1413. The controller 1413 illustrated in Fig. 14 can be a chip or a chip-set. In some examples the controller 1413 can be configured to control a first user device 105A or a second user device 105B or a device within the network 109.

In the example of Fig. 14 the implementation of the controller 1413 can be as controller circuitry. In some examples the controller 1413 can be implemented in hardware alone, have certain aspects in software including firmware alone or can be a combination of hardware and software (including firmware).

As illustrated in Fig. 14 the controller 1413 can be implemented using instructions that enable hardware functionality, for example, by using executable instructions of a computer program 1407 in a general-purpose or special-purpose processor 1403 that can be stored on a computer readable storage medium (disk, memory etc.) to be executed by such a processor 1403.

The processor 1403 is configured to read from and write to the memory 1405. The processor 1403 can also comprise an output interface via which data and/or commands are output by the processor 1403 and an input interface via which data and/or commands are input to the processor 1403.

The memory 1305 is configured to store a computer program 1307 comprising computer program instructions (computer program code 1409) that controls the operation of the controller 1413 when loaded into the processor 1403. The computer program instructions, of the computer program 1407, provide the logic and routines that enables the controller 1401 to perform the methods illustrated in Figs. 2 and 3. The processor 1403 by reading the memory 1405 is able to load and execute the computer program 1407.

The apparatus 1401 can be provided within devices such as a second user device 105B. In such examples the apparatus 1401 comprises: at least one processor 1403; and at least one memory 1405 including computer program code 1409, the at least one memory 1405 and the computer program code 1409 configured to, with the at least one processor 1403, cause the apparatus 1401 at least to perform:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

In some examples the apparatus 1401 can be provided within devices such as a network device or any other suitable device within a system 101. In such examples the apparatus 1401 comprises: at least one processor 1403; and at least one memory 1405 including computer program code 1409, the at least one memory 1405 and the computer program code 1409 configured to, with the at least one processor 1403, cause the apparatus 1401 at least to perform:
obtaining a generic sensation profile indicative of target sensations that are to be provided to a user;
obtaining information indicative physiological features of a plurality of sensory nerves and receptors of the user;
personalising the generic sensation profile to account for the physiological features of a plurality of sensory nerves and receptors of the user; and
enabling the personalised sensation profile to be used to control stimuli provided to the user so as to generate sensations corresponding to the target sensations of the generic sensation profile.

As illustrated in Fig. 14 the computer program 1407 can arrive at the controller 1401 via any suitable delivery mechanism 1411. The delivery mechanism 1411 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1407. The delivery mechanism can be a signal configured to reliably transfer the computer program 1407. The controller 1413 can propagate or transmit the computer program 1407 as a computer data signal. In some examples the computer program 1407 can be transmitted to the controller 1413 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 1407 can be used for devices such as second user devices 105B. In such examples the computer program 407 comprises computer program instructions for causing an apparatus 1401 to perform at least the following:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

The computer program 1407 can be used for devices such as network devices or any other suitable devices within the system 101. In such examples the computer program 407 comprises computer program instructions for causing an apparatus 1401 to perform at least the following:
obtaining a generic sensation profile indicative of target sensations that are to be provided to a user;
obtaining information indicative physiological features of a plurality of sensory nerves and receptors of the user;
personalising the generic sensation profile to account for the physiological features of a plurality of sensory nerves and receptors of the user; and
enabling the personalised sensation profile to be used to control stimuli provided to the user so as to generate sensations corresponding to the target sensations of the generic sensation profile.

The computer program instructions can be comprised in a computer program 1407, a non-transitory computer readable medium, a computer program product, a machine readable medium. In some but not necessarily all examples, the computer program instructions can be distributed over more than one computer program 1407.

Although the memory 1405 is illustrated as a single component/circuitry it can be implemented as one or more separate components/circuitry some or all of which can be integrated/removable and/or can provide permanent/semi-permanent/ dynamic/cached storage.

Although the processor 1403 is illustrated as a single component/circuitry it can be implemented as one or more separate components/circuitry some or all of which can be integrated/removable. The processor 1403 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software cannot be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Figs. 2 and 3 can represent steps in a method and/or sections of code in the computer program 1407. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Explicitly indicate that features from different examples (e.g. different methods with different flow charts) can be combined, to

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

2. An apparatus as claimed in claim 1 wherein the personalised sensation profile is generated by;
obtaining a personalised sensory map for the user where the personalised sensory map indicates the physiological features of a plurality of sensory nerves and receptors of the user; and
using the personalised sensory map to modify a generic sensation profile.

3. An apparatus as claimed in claim 2 wherein the personalised sensory map is obtained by;
applying a stimulating electrical input signal to the user so as to cause optically detectable changes of the plurality of sensory nerves and receptors of the user; and
using one or more optical devices to detect the optically detectable changes and using the outputs of the optical devices to generate the personalised sensory map.

4. An apparatus as claimed in any preceding claim wherein obtaining the personalised sensation profile comprises receiving a generic sensation profile and personalising the generic sensation profile to account for the locations of the plurality of sensory nerves and receptors of the user.

5. An apparatus as claimed in any of claims 1 to 3 wherein obtaining the personalised sensation profile comprises receiving the personalised sensation profile from a network device.

6. An apparatus as claimed in any preceding claim wherein the target sensations indicated in the personalised sensation profile correspond to one or more sensations experienced by a different user.

7. An apparatus as claimed in any preceding claim wherein the stimuli provided to the user comprise a plurality of stimulating electrical signals provided by a plurality of electrodes positioned on the user and information from the personalised sensation profile is used to control one or more parameters of the electrical stimulating signal signals provided by the electrodes to the user.

8. An apparatus as claimed in claim 7 wherein the one or more parameters of the electrical stimulating signals that are controlled comprise of amplitude, frequency, duration, cycle, pattern, shape.

9. An apparatus as claimed in any of claims 7 to 8 wherein the plurality of electrodes are provided within a wearable device.

10. An apparatus as claimed in any preceding claim wherein the plurality of sensory nerves and receptors of the user comprise one or more of: heat receptors, cold receptors, pain receptors, itch sensitive receptors, hair movement receptors, mechanoreceptors.

11. A method comprising:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

12. A computer program comprising computer program instructions that, when executed by processing circuitry, cause:
obtaining a personalised sensation profile for a user where the personalised sensation profile indicates target sensations that are to be provided to the user and is personalised to take into account physiological features of a plurality of sensory nerves and receptors of the user; and
using the personalised sensation profile to control stimuli provided to the user so as to generate sensations corresponding to the personalised sensation profile.

13. An apparatus comprising means for:
obtaining a generic sensation profile indicative of target sensations that are to be provided to a user;
obtaining information indicative physiological features of a plurality of sensory nerves and receptors of the user;
personalising the generic sensation profile to account for the physiological features of a plurality of sensory nerves and receptors of the user; and
enabling the personalised sensation profile to be used to control stimuli provided to the user so as to generate sensations corresponding to the target sensations of the generic sensation profile.

14. An apparatus as claimed in claim 13 wherein the information indicative physiological features of a plurality of sensory nerves and receptors of the user is obtained in a personalised sensory map of the user.

15. A system comprising a first user apparatus, a second user apparatus and at least one network apparatus wherein;
the first user apparatus is configured to detect sensations of a first user and generate a generic sensation profile indicative of the detected sensations;
the network apparatus is configured to obtain the generic sensation profile and information indicative of physiological features of a plurality of sensory nerves and receptors of a second user and personalise the generic sensation profile to account for the physiological features of a plurality of sensory nerves and receptors of the second user; and
the second user apparatus is configured to obtain the personalised sensation profile for the second user and use the personalised sensation profile to control stimuli provided to the second user so as to generate sensations corresponding to the generic sensation profile.
